# EUROPEAN PATENT APPLICATION

(11) **EP 1 431 348 A1**
(43) Date of publication of application: **23.06.2004**
(21) Application number: 02028216.6
(22) Date of filing: 16.12.2002
(51) Int. Cl.: C08L 95/00, E04D 5/02

(54) **Block copolymer modified bitumen felts**

(71) Applicant: KRATON Polymers Research B.V., 1031 CM Amsterdam (NL)
(72) Inventor: Trommelen, Erik A. T., 1031 CM Amsterdam (NL); Damen, Jacques W. M., 1031 CM Amsterdam (NL); van Hek, Jeffrey R., 1031 CM Amsterdam (NL)
(74) Representative: Kortekaas, Marcellinus C. J. A.

(57) **Abstract**

Thin block copolymer modified bituminous felts for roofing application and for application in construction and/or building industry, comprising a weight proportion of the block copolymer constituent in the range of from 15 to 50 wt%, relative to the weight of block copolymer and bitumen, block copolymer modified bituminous composition to be used for said felts, and the use of said felts for roofing, bridge deck layers and protective layers for concrete, steel and/or other constructions.

## Description

### Technical Field

The present invention relates to block copolymer modified bitumen felts, to block copolymer modified bitumen compositions to be used for their manufacture, and the use of said felts for roofing and for application in construction and/or building industry, e.g. bridge deck layers and protective layers for concrete, steel and/or other constructions.

More in particular the present invention relates to block copolymer modified bitumen felts which comprise a block copolymer of vinyl aromatic and conjugated diene and which can be used in a significant smaller thickness as compared to the conventional felts without affecting the felt's functional performance.

### Description of Background Art

During the last two decades of the manufacture of block copolymer modified bituminous compositions, in particular for roofing, a clear trend has developed which aimed at using one or more block copolymers in bitumen, in actual weight proportions of up to 15 wt%, relative to the weight of the bitumen and block copolymer, while fillers were incorporated in actual weight proportions in the range of from 20 to 40 wt%, relative to the weight of the complete composition.

Such bituminous compositions were known from e.g. US patents nos. 4,405,680; 4,904,713; 5,051,457; 5,447,775; 5,308,676; 5,719,216; 5,854,335; 5,798,401 and 6,120,913.

As said block copolymer constituents clearly formed and still form the most expensive elements of such modified bituminous compositions, there was no incentive at all for economical reasons to look for significantly increased proportions of such block copolymers.

On the other hand a clear economical need has developed to provide roofing felts and other protecting felts in the building industry, which can be applied as sole single felt, which should be able to form a adequate barrier against water e.g. rain water or ground water, which moreover can contain increasing amounts of corrosive agents (securing water tightness) instead of the commonly applied multilayer systems, and which should not increase the weight of the complete construction and in particular roofs.

It is therefore an object of the present invention to provide block copolymer modified bituminous compositions and felts derived from them, which meet the hereinbefore mentioned conditions.

Another object of the present invention is the use of such block copolymer modified bituminous felts in building and/or engineering industry in an economically improved way.

### Summary of the invention

As result of extensive research and experimentation, said block copolymer bituminous compositions and felts derived from them aimed at, have surprisingly been found.

Accordingly, the invention relates to thin block copolymer modified bituminous felts, comprising at least one block copolymer, comprising at least two poly(vinyl aromatic) blocks and at least one poly(conjugated diene) block in a weight proportion of more than 15 wt% and more particular in the range of from 15 to 50 wt%, relative to the weight of the block copolymer and bitumen constituent, and optionally at least one filler, in a weight proportion in the range of from 0 to 50 wt%, relative to the weight of the complete composition, and wherein the respective weight proportions of block copolymer bitumen and filler add up to 100%.

### Detailed description of the invention

With the term "thin", as used throughout the present specification, is meant that the block copolymer modified bituminous felts of the present invention can have a thickness which is in average reduced with up to 40% as compared to similar prior art bituminous felts, while the relevant mechanical properties have been significantly improved into an excellent package.

More in particular the service temperature of said bituminous felts of the present invention have been found to be increased from e.g. 110°C to 170°C, the cold bend temperature has been found to be decreased from -30°C to -50°C or lower, while a high stiffness (walk-on-ability) was found in combination with an excellent low temperature flexibility.

It will be appreciated that such properties allow a substantial reduction in felt thickness without affecting the felt's functional performance requirements, i.e. sealing surfaces and securing water tightness.

This results in lower weight felts and potential significant economical advantages.

Moreover, the high level of copolymer modification will strengthen the service lifetime guarantee of critical performance indicators for protection against outside water, and in particular roofing applications.

It will be appreciated that the extra costs of the additional amounts of block copolymer constituent in the bituminous compositions of the present invention will be much more than compensated by the surprisingly found advantages of the package of improved properties and the enabled use of significantly thinner felts.

The vinyl aromatic monomer to be incorporated into the block copolymer constituent may be selected from styrene; o-methyl styrene; p-methyl styrene; p-tert-butyl styrene; 2,4-dimethylstyrene; alpha-methyl-styrene; vinyl naphthalene; vinyl toluene and vinyl xylene or mixtures thereof. A preferred vinyl aromatic monomer is styrene as substantially pure homomonomer or as main monomers, mixed with minor proportions (at most 10 wt%) of one or more of the other structurally related vinyl aromatic monomer(s) as specified hereinbefore, or with minor proportions of a comonomer (e.g. butadiene or isoprene). The use of substantially pure styrene is most preferred.

The conjugated diene monomer can be selected from butadiene; isoprene; 2,3-dimethyl 1,3-butadiene; 1,3-pentadiene, 1,3-hexadiene and mixtures thereof. Preferred conjugated diene comonomers are butadiene or isoprene or mixtures thereof. Said mixtures of butadiene and isoprene can be copolymerized into a central block, comprising individual homopolymer blocks of poly(butadiene) and poly(isoprene) or one sole substantially random copolymerized block, having average homopolymer block lengths of less than 100 monomer units and preferably of less than 20 monomer units. A more preferred conjugated diene comonomer is butadiene, which can be used as substantially pure comonomer alone (content more than 99%), or as main monomer, mixed with minor proportions (at most 10 wt%) of one or more of the hereinbefore specified structurally related conjugated diene monomer or with minor proportions of a vinyl aromatic comonomer such as styrene. The use of a substantially pure butadiene is preferred.

The block copolymers may be either linear or radial and will preferably have apparent total molecular weights in the range of from 40,000 to 500,000 and more preferably from 60,000 to 200,000.

It will be appreciated that the main linear triblock copolymers or radial block copolymers may also comprise relatively minor amounts of accompanying diblock copolymers, comprising the same poly(vinyl aromatic) block, and a poly(conjugated diene block) of an apparent molecular weight, being the half of the molecular weight of the central block poly(conjugated diene block) in a triblock and resulting from the manufacture of said triblock copolymer or radial block copolymer by coupling initially prepared living diblock copolymers with a coupling agent, as illustrated in e.g. US patents nos. 3,231,635; 3,251,905; 3,390,207; 3,598,887 and 4,219,627 and EP patent applications nos. 0413294A₂; 0387671A₁; 0636654A₁ and WO 04/22931, the disclosures of which have been incorporated herein by reference.

The diblock content can be in the range of from 0 to 90 wt% and preferably from 0 to 35 wt%, and more preferably from 0 to 20 wt%, relative to the total weight of block copolymer(s).

The 1,2-addition during the polymerization of conjugated diene and preferably butadiene (vinyl content) is generally in the range of from 5 to 65 mole%, preferably in the range of from 8 to 45 and more preferably from 8 to 25 mole%.

The block copolymers may have bound vinyl aromatic monomer contents in the range of from 15 to 50 % and more preferably from 25 to 45 % and will have a linear triblock structure or radial structure (S-B-S or (SB)ₙ-X). More preferred block copolymers are linear triblock (S-B-S) copolymers.

Examples of suitable block copolymers to be used according to the present invention are KRATON D1101, KRATON D1102, KRATON D1118, KRATON D1186, KRATON D1184, KRATON D1192, KRATON KX219 and KRATON KX220 block copolymers (KRATON is a registered trademark).

It will be appreciated that the applied block copolymer constituents may also have been selectively hydrogenated, which means that the poly(conjugated diene) central block(s) may have been fully or partially hydrogenated (residual unsaturation less than 25% of the original unsaturation), whereas the poly(vinyl aromatic) blocks have not been hydrogenated, e.g. as known from US patents nos. 3,113,986; 4,226,952; 5,039,755 and Reissue no. 27145, the disclosures of which are herein incorporated by reference.

The use of said hydrogenated block copolymers (S-EB-S or [S-EB]ₙ-X) will provide as additional advantageous feature, that no protecting agent on the block copolymer modified bituminous felt upper surface will be necessary, such as slate chippings and the like.

Examples of said block copolymer constituents are KRATON G1652 and G1654 block copolymers.

In preferred block copolymer modified bituminous compositions of the present invention, the weight proportion of block copolymer constituents will be in the range of from 20 to 40 wt%, relative to the weight of the bitumen and block copolymer constituents.

The bitumen constituent can be selected from naturally occurring bitumens or bitumens derived from mineral oil. Also petroleum pitches obtained by a cracking process and coal tar can be used as the bituminous component, as well as blends of various bituminous materials.

Examples of suitable components include distillation or "straight-run bitumens". Precipitation bitumens, e.g. propane bitumens, blown bitumens, e.g. catalytically blown bitumen or "multiphate", and mixtures thereof.

Other suitable bituminous components include mixtures of one or more of these bitumens with extenders (fluxes) such as petroleum extracts, e.g. aromatic extracts, distillates or residues, or with oils.

Suitable bituminous components (e.g. either "straight-run bitumens" or "fluxed bitumens") are those having a penetration in the range of from 30 to 350 dmm at 25°C (as measured according to ASTM D5).

Preferably quite hard bitumens of a penetration of from 30 to 100 dmm and more preferably from 60 to 80 dmm may be used.

The block copolymer modified bituminous compositions of the present invention may also comprise other ingredients that may be required due to the specific end-use envisaged.

Said other ingredients may be flame retarders, stabilizers, anti-statics, resins, oils, occurring in weight proportions in the range of from 0 to 15 wt%, relative to the weight of block copolymer and bitumen.

Fillers are included such as talc, calcium carbonate, carbon black fly ash, slate dust, limestone, dolomite and siliceous fillers such as clay, mica and other sheet silicates or mixtures of said fillers.

The block copolymer modified bituminous compositions of the present invention may be prepared by various methods.

The block copolymer and bitumen constituents can be blended at an elevated temperature, preferably not higher than 190°C for unhydrogenated block copolymers and not higher than 230°C for hydrogenated block copolymers, in conventional high shear blenders such as a ribbon blender, a drum mixer, where after the filler can be mixed in, wherein lower molecular weight block copolymers have been included.

For compositions wherein relatively higher molecular weight block copolymers have been included, blending of block copolymer with bitumen may be carried out by calendaring, in a Branbury internal mixer or any other means known to be used for blending high viscous compositions.

It will be appreciated that the block copolymer modified bituminous felts of the present invention will have a thickness of from 1.5 to 2.5 mm for roofing felts and from 2.5 to 3.5 mm for bridge deck layers.

Said modified bituminous felts may be applied as one single layer and are therefore significantly cheaper than conventional felts and/or multilayer systems.

The block copolymer modified bituminous felts of the present invention have a service temperature of from -35°C or lower.

The following examples illustrate the present invention, however without restricting its scope to these specific embodiments.

### Examples

Several block copolymers and bitumen grades were mixed in a SILVERSON LR2 high shear mixer in weight proportions as specified in the following table. The bitumen was heated to 160°C and subsequently the block copolymers were added. During polymer addition the temperature was kept under 180°C. Blending was continued until a homogeneous blend was obtained. A filler, if any, was added under mixing.

### Conclusion

The block copolymer modified bitumen compositions of Examples I and III (vs. comparative Examples II and IV) exhibit an outstanding balance between high stiffness (low Pen at 50°C) and excellent Low Temperature performance. This results in a superb Service Temperature range. Moreover, the novel compositions maintain their low Cold Bend property even if use is made of (cheap) filler. Examples V and VI demonstrate that the invention is not limited to a specific block copolymer of bitumen.

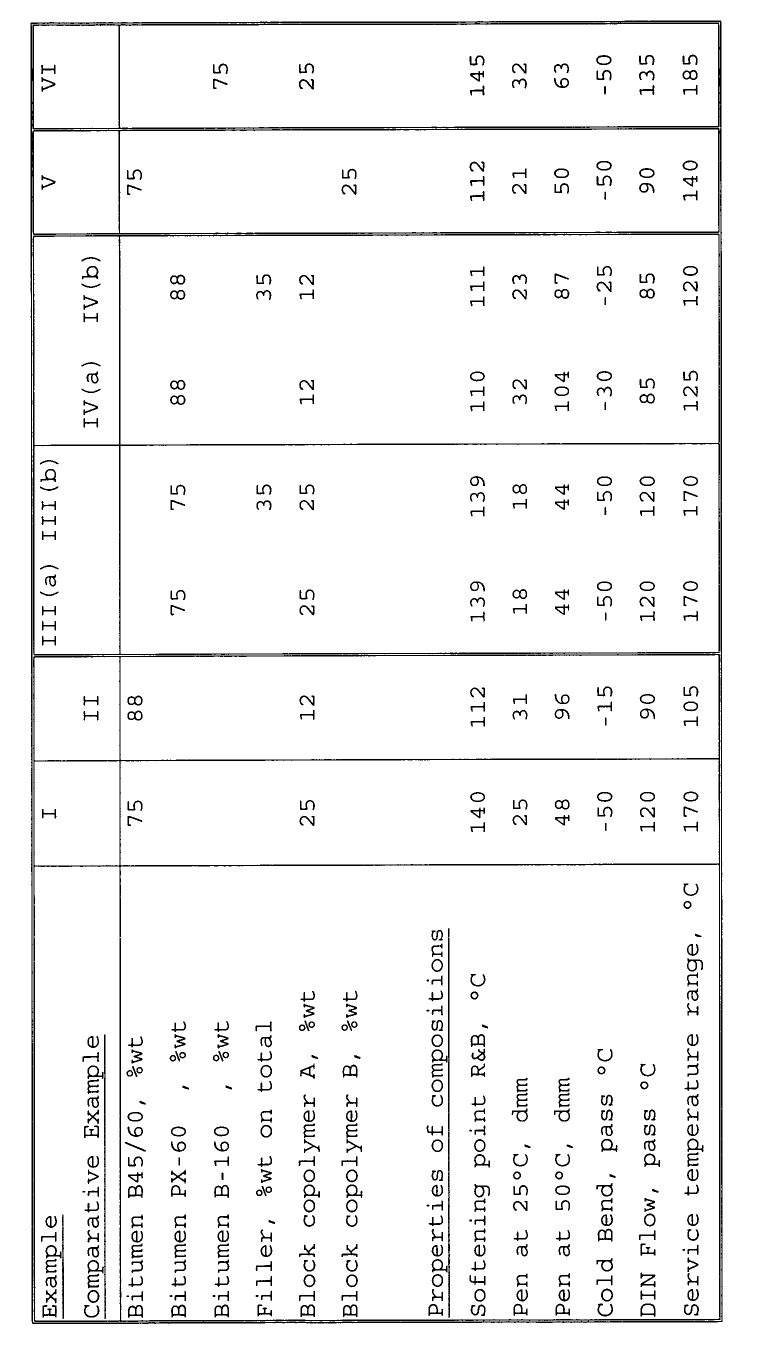

The test methods used were:
- Viscosity: evaluated at 180°C using a Haeke roto-viscosimeter, using a shear rate of 20 s⁻¹ and 100 s⁻¹
- Cold blend: according to UEAtc M.O.A.T. no. 31; 1984,
- Flow Resistance Temperature: according to DIN 52123; Aug. 1985,
- Softening point R&B: according to ASTM D36, corrected for stirring with +1.5°C,
- Penetration: at 25°C or 50°C according to ASTM D5-94.

The bitumen grades used for the listed examples were compatible bitumens:
- PX-60 bitumen is a mixture of 81 wt% of propane bitumen ex-Phillipines (Pinilla, TMC no. 26260) +19 wt% of Bright Furfural Extract (BFE, aromatic oil/flux, TMC no. 24206), showing a penetration of 60 dmm at 25°C.
- B45/60 is a bitumen obtained by vacuum distillation of Venezuelan crude oil (in ESHA refinery, Amsterdam), having a penetration of 50 dmm at 25°C.
- B-160 is a bitumen obtained by vacuum distillation of Middle East crude oil supplied by SIPLAST (TOTAL), showing a penetration of 160 dmm at 25°C.

Block copolymer A is a triblock copolymer, comprising poly(styrene) blocks and a poly(butadiene) block, having a PSC of 31 wt%, a total molecular weight of 171,000, a vinyl content of 8 mole% and a coupling efficiency of 80%.

Block copolymer B is a triblock copolymer, comprising poly(styrene) blocks and a poly(butadiene) block, having a PSC of 29.5 wt%, a total molecular weight of 127,000 (measured by Gel Permeation Chromatography and expressed in terms of standard poly(styrene)), a coupling efficiency of 84% and a vinyl content of 8 mole%.

As filler was used WIGRO limestone (WIGRO is a trademark).

## Claims

1. Thin block copolymer modified bituminous felts, comprising at least one block copolymer, comprising at least two poly(vinyl aromatic) blocks and at least one poly(conjugated diene) block, in a weight proportion of from 15 to 50 wt%, relative to the weight of the block copolymer and bitumen constituents and optionally at least one filler, in a weight proportion in the range of from 0 to 50 wt%, relative to the weight of the complete composition and wherein the respective weight proportions of block copolymer, bitumen and filler add up to 100%.

2. Thin block copolymer modified bituminous felts according to claim 1, wherein the weight proportions of block copolymer constituents is in the range of from 20 to 40 wt%, relative to the weight of the blockcopolymer and bitumen constituents.

3. Thin block copolymer modified bituminous felts according to claims 1 and 2, having a service temperature of from 140-200°C and a cold bend temperature of from -35°C or lower.

4. Thin block copolymer modified bituminous felts according to claim 1, wherein the block copolymer constituent is a linear triblock copolymer S-B-S, optionally mixed with diblock S-1/2B, wherein S represents poly(styrene) and B represents poly(butadiene) and wherein the diblock copolymer occurs in a weight proportion of from 0 to 35 wt%.

5. Thin block copolymer modified bituminous felts according to claim 1, wherein the bound poly(vinyl aromatic) content in the block copolymer constituent(s) is in the range of from 25 to 45 wt%.

6. Thin block copolymer modified bituminous felts according to claim 1, wherein the 1,2-addition in the conjugated diene polymerization is in the range of from 5 to 65 mole% and preferably from 8 to 45 mole%.

7. Thin block copolymer modified bituminous felts according to claim 1, having a thickness of from 1.5 to 2.5 mm if they are envisaged as roofing felts.

8. Thin block copolymer modified bituminous felts according to claim 1, having a thickness of from 2.5 to 3.5 mm, if they are envisaged as bridge deck layers.

9. Block copolymer modified bituminous compositions, to be used for the manufacture of felts according to claims 1-8, wherein the bitumen constituent has a penetration value at 25°C (according to ASTM D5) in the range of from 30 to 100 dmm and preferably from 60 to 80 dmm, and wherein the block copolymer occurs in a weight proportion in the range of from 20 to 50 wt% and preferably from 20 to 40 wt%, relative to the weight of bitumen and block copolymer.

10. Use of thin block copolymer modified bituminous felts according to claims 1-8 for roofing and application in construction and/or building industry.
